# EUROPEAN PATENT APPLICATION

(11) **EP 4 632 574 A1**
(43) Date of publication of application: **15.10.2025**
(21) Application number: 25168467.6
(22) Date of filing: 04.04.2025
(51) Int. Cl.: G06F 9/50, G06F 11/34, G06F 12/06

(54) **METHOD AND APPARATUS FOR PROCESSING WORKLOAD USING MEMORIES OF DIFFERENT TYPES**

(30) Priority: 11.04.2024 US 202463632851 P; 08.05.2024 KR 20240060775
(71) Applicant: Samsung Electronics Co., Ltd., Suwon-si, Gyeonggi-do 16677 (KR); Virginia Tech Intellectual Properties, Inc., Blacksburg, VA 24060 (US)
(72) Inventor: Shin, Youngsam, Suwon-si, Gyeonggi-do 16678 (KR); Liu, Jinshu, Blacksburg, VA 24060 (US); Hadian, Hamid, Blacksburg, VA 24060 (US); Cho, Yeongon, Suwon-si, Gyeonggi-do 16678 (KR); Li, Huaicheng, Blacksburg, VA 24060 (US); Min, Changwoo, Blacksburg, VA 24060 (US)
(74) Representative: Grünecker Patent- und Rechtsanwälte PartG mbB

(57) **Abstract**

A method for processing a workload includes: predicting system performance according to mixed use of a first memory and a second memory based on a performance monitoring result of a processor; determining a memory usage policy regarding the mixed use of the first memory and the second memory based on the system performance; and processing the workload using the first memory and the second memory according to the memory usage policy.

## Description

### 1. Technical Field

The following disclosure is directed to a method and apparatus for processing a workload using memories of different types.

The invention is claimed in the independent claims. Preferred embodiments are specified in the dependent claims.

### 2. Discussion of Related Art

Recently, hardware such as processors and memories has been rapidly developing along with artificial intelligence. In the field of memory, new memory technologies such as High Bandwidth Memory (HBM) and Compute Express Link (CXL) memory are emerging. HBM is a memory technology for performing high-performance computing and graphics processing. HBM may have a three-dimensional stacked structure and provide a high bandwidth and a low latency. CXL is an open standard interface for high-speed communication, and may provide a comprehensive interface environment that connects multiple components, such as a central processing unit (CPU), a memory, an accelerator, and other peripheral devices. CXL may provide a CPU and a CXL memory. A workload may be processed using memories of different types.

### SUMMARY

According to an embodiment, there is provided a method for processing a workload including: predicting system performance according to mixed use of a first memory and a second memory of different types, based on a performance monitoring result of the processor; determining a memory usage policy regarding the mixed use of the first memory and the second memory based on the system performance; and processing the workload using the first memory and the second memory according to the memory usage policy.

According to an embodiment, there is provided an electronic device including a processor, a first memory of a first type, and a second memory of a second type different from the first type. The processor is configured to predict system performance according to mixed use of the first memory and the second memory, based on a performance monitoring result of the processor, determine a memory usage policy regarding the mixed use of the first memory and the second memory based on the system performance, and process a workload using the first memory and the second memory according to the memory usage policy.

According to an embodiment, there is provided a method for processing a workload by a system including a processor having a cache, a first memory of a first type and a second memory of a second type different from the first memory. The method includes: performing at least one of a slowdown prediction of the first memory and a slowdown prediction of the cache to predict system performance; determining a memory usage policy that uses i) both the first memory and the second memory, ii) the first memory solely, or the iii) the second memory solely based on the system performance; and processing a workload according to the determined memory usage policy.

### BRIEF DESCRIPTION OF THE DRAWINGS

These and/or other aspects and features of the inventive concept will become apparent and more readily appreciated from the following description of embodiments, taken in conjunction with the accompanying drawings of which:
FIG. 1 is a diagram exemplarily illustrating a configuration of an electronic device according to an embodiment;
FIG. 2 is a flowchart exemplarily illustrating a method of processing a workload using memories of different types according to an embodiment;
FIG. 3 is a diagram exemplarily illustrating a memory usage policy according to an embodiment;
FIG. 4 is a diagram exemplarily illustrating interval performances and interval policies based on time intervals according to an embodiment;
FIG. 5 is a diagram exemplarily illustrating page information and importance information about sample pages of memory pages according to an embodiment; and
FIG. 6 is a diagram exemplarily illustrating a process of determining a degree of importance according to an embodiment.

### DETAILED DESCRIPTION

The following detailed description is provided as examples of certain embodiments of the inventive concept that may be implemented. However, the inventive concept is not limited to these embodiments since various alterations and modifications may be made to the examples. Thus, the embodiments are understood to include all changes, equivalents, and replacements within the technical scope of this description.

Although terms, such as first, second, and the like, may be used herein to describe various components, the components are not limited to these terms. These terms should merely be used to distinguish one component from another component. For example, a first component may be referred to as a second component, and similarly the second component may also be referred to as the first component.

It should be noted that if it is described that one component is "connected", "coupled", or "joined" to another component, a third component may be "connected", "coupled", and "joined" between the first and second components, although the first component may be directly connected, coupled, or joined to the second component.

As used herein, the singular forms "a", "an", and "the" include the plural forms as well, unless the context clearly indicates otherwise.

As used herein, "at least one of A and B", "at least one of A, B, or C," and the like, each of which may include any one of the items listed together in the corresponding one of the phrases, or all possible combinations thereof.

Hereinafter, embodiments will be described in detail with reference to the accompanying drawings. When describing the embodiments with reference to the accompanying drawings, like reference numerals refer to like components, and any repeated description related thereto will be omitted.

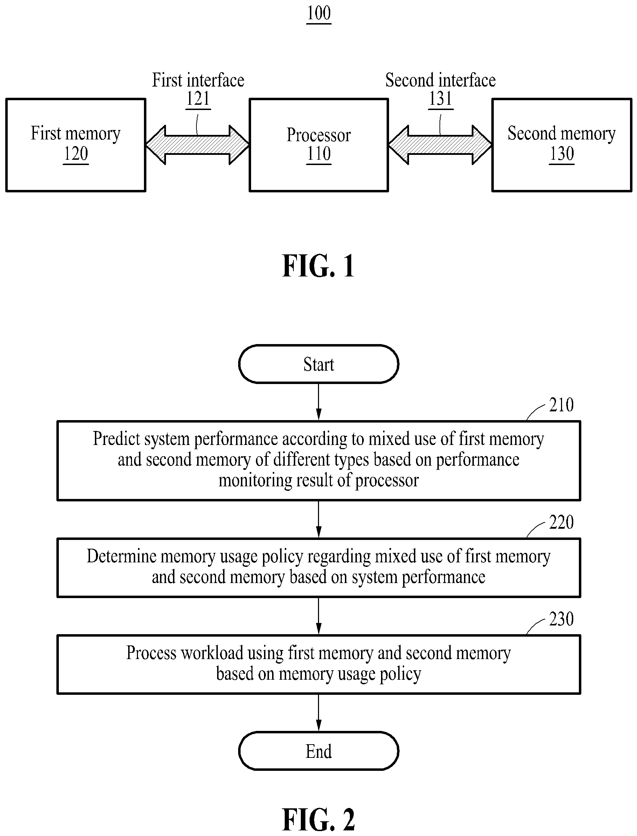

FIG. 1 is a diagram exemplarily illustrating a configuration of an electronic device according to an embodiment. Referring to FIG. 1, an electronic device 100 may include a processor 110, a first memory 120, and a second memory 130. The processor 110 may be a central processing unit (CPU), but is not limited thereto. Although not shown in FIG. 1, the electronic device 100 may further include other devices such as a storage device (e.g., a disk), an input device, an output device, and a network device. For example, the electronic device 100 may be implemented as at least a part of a mobile device such as a mobile phone, a smart phone, a personal digital assistant (PDA), a netbook, a tablet computer or a laptop computer, a wearable device such as a smart watch, a smart band or smart glasses, a computing device such as a desktop or a server, a home appliance such as a television, a smart television or a refrigerator, a security device such as a door lock, or a vehicle such as an autonomous vehicle, a smart vehicle, an unmanned vehicle or a drone.

The first memory 120 and the second memory 130 may be of different types. Accordingly, the first memory 120 and the second memory 130 may have different characteristics. For example, the first memory 120 and the second memory 130 may differ from each other in latency, interface, or combination thereof. For example, the first memory 120 may include dynamic random-access memory (DRAM), high bandwidth memory (HBM), static random-access memory (SRAM), flash memory, magneto-resistive random-access memory (MRAM), or a combination thereof, and the second memory 130 may include a compute express link (CXL) memory. However, embodiments are not limited thereto.

The processor 110 and the first memory 120 may be connected through a first interface 121 (e.g., a first interface circuit), and the processor 110 and the second memory 130 may be connected through a second interface (e.g., a second interface circuit). The first interface 121 and the second interface 131 may be the same as or different from each other. For example, the first interface 121 may include peripheral component interconnect (PCI), PCI express (PCIe), HBM interface, or a combination thereof, and the second interface 131 may include CXL. However, embodiments are not limited thereto. The first memory 130 may be arranged closer to the processor 110 than the second memory 130, and the second memory 130 may be arranged farther from the processor 110 than the first memory 120. For example, the first memory 130 may be a local memory of the processor 110, and the second memory 130 may be a remote memory.

The processor 110 may process a workload under the control of an operating system (OS). For example, the processor 110 may process the workload and execute an application corresponding to the workload. The OS may be stored in the first memory 120, but embodiments are not limited thereto. The processor 110 may process the workload using the first memory 120 and the second memory 130 under the control of the OS. The OS may control the process of processing the workload using the first memory 120 and the second memory 130 so that the system performance of the electronic device 100 may be optimized. The workload may include a first number of operations performed on the first memory 120 such as reading, writing and deleting and/or a second number of operations performed on the second memory 130 such as reading, writing and deleting.

For example, the first memory 120 may be more expensive but provide a lower latency than the second memory 130. In this case, the second memory 130 may be appropriately used to reduce the cost of manufacturing a memory system while achieving an acceptable memory function. For example, low-cost additional bandwidth provided by the second memory 130 may be effectively used for data-intensive applications. Movement of memory pages between the first memory 120 and the second memory 130 may degrade system performance. According to an embodiment, a memory usage policy for appropriate mixed use of the first memory 120 and the second memory 130 is provided. Memory sampling overhead and page migration overhead may be reduced according to the memory usage policy, and the system performance of the electronic device 100 may be optimized.

FIG. 2 is a flowchart exemplarily illustrating a method of processing a workload using memories of different types according to an embodiment. Referring to FIG. 2, in operation 210, an electronic device predicts system performance according to mixed use of a first memory and a second memory of different types, based on a performance monitoring result of a processor. For example, the performance monitoring result may be provided by a performance monitoring unit (PMU). For example, the PMU may be hardware included in the processor or another component of the electronic device, or software provided by an OS. The performance monitoring result may include information about a number of cache misses, a memory access latency, a number of translation lookaside buffer (TLB) misses, a computation speed, or a combination thereof during a given period. For example, the PMU may include a counter, and may count the number of cache misses and the number of TLB misses using the counter.

The processor may predict the system performance of the electronic device. For example, the system performance prediction may include a memory slowdown prediction, a cache slowdown prediction, or a combination thereof. The values (e.g., a to h, m, x, and y described below) required to predict system performance may be provided by the PMU, or may be obtained by processing those provided by the PMU.

For example, the memory slowdown prediction may include a load slowdown prediction of the first memory. A load slowdown of the first memory 120 may be predicted by dividing a number of stalled cycles 'm' that occur during a given period by the total number of cycles 'g' that occur during the given period. Here, 'm' may denote the number of stalled cycles due to cache misses (e.g., level 3 (L3) cache misses. The cycles may be cycles of a time interval to which data used to predict a load slowdown belongs. In a stalled cycle, the processor 110 may be unable to proceed with execution of an instruction. For example, if the processor 110 needs data stored in a memory (e.g., 120 or 130) to proceed during a given cycle, and the data is not present in the memory, the given cycle may be referred to as a stall or a stalled cycle.

In memory slowdown prediction, outliers may occur due to the influence of memory level parallelism (MLP). The effect of outliers may be reduced using an average latency. The average latency may be calculated by dividing the MLP of a cache (e.g., a level 2 (L2) cache) 'x' by an offcore demand read latency 'y'. In this case, if x/y is less than a threshold number of cycles (e.g., "45" cycles), (m/g)/(k-(x/(y*p))) may be used to predict the load slowdown of the first memory. In an embodiment, the MLP of a cache is a measure based on the number of concurrent memory accesses to the cache during a given period. In an embodiment, the offcore demand read latency is the time it takes for the processor 110 to retrieve data from memory locations that are not stored in the processor's on-chip caches but instead need to be fetched from off-chip memory (e.g., the first memory 120 or the second memory 130). In an embodiment, k and p denote coefficients according to hardware settings, respectively. If x/y is greater than a threshold number of cycles, the load slowdown may be predicted using m/g.

For example, the cache slowdown prediction may include a cache load slowdown prediction. In an embodiment, a/(a+b)*(c-d)/c*(e-f)/g is used to calculate the cache load slowdown prediction. Here, 'a' may denote the number of line fill buffer hits, 'b' may denote the number of cache (e.g., L1 cache) misses, 'c' may denote the number of cache (e.g., L1 data cache) hardware prefetch requests and software prefetch requests that have a predetermined response type, 'd' may denote the number of cache (e.g., L1 data cache) hardware prefetch requests and software prefetch requests that hit in a cache (e.g., L3 cache), 'e' may denote the number of stalled cycles due to cache misses (e.g., L1 cache misses), 'f' may denote the number of stalled cycles due to cache misses (e.g., L2 cache misses), and 'g' may denote the total number of cycles. In an embodiment, a line fill buffer is a component that temporarily holds data being transferred between a cache of the processor 110 and the processor 110, and a line fill buffer hit occurs when this temporary data is needed for an operation and present in the line fill buffer. In an embodiment, a cache hardware prefetch request is when a hardware prefetcher (e.g., a logic circuit of the processor 110) sends a request to load data into the cache that it predicts will be needed in the near future. In an embodiment, a cache software prefetch request is an instruction of a program executed by the processor 110 that sends the request.

For example, memory slowdown prediction and cache slowdown prediction may include a store slowdown prediction. In an embodiment, the store slowdown prediction is calculated by dividing the number of cycles in which a store buffer is full and there is no load remaining 'h' by the total number of cycles 'g'. In an embodiment, the store buffer temporarily holds store (write) operations before they are committed to a local memory (e.g., 120). For example, the hardware prefetcher, the line fill buffer or the store buffer may be located within the processor 110.

In operation 220, the processor determines a memory usage policy regarding the mixed use of the first memory and the second memory based on the system performance. For example, the memory usage policy may include the mixed use of the first memory (e.g., 120) and the second memory (e.g., 130), sole use of the first memory, sole use of the second memory, or a combination thereof. For example, the mixed use may include memory interleaving. For example, the memory interleaving may include non-uniform memory access (NUMA) interleaving. If mixed use is determined to be the memory usage policy, the processor may determine a mixed use ratio for the mixed use based on an offcore latency, a memory metric, or a combination of the offcore latency and the memory metric. For example, when the rate of use of the first memory is S%, the rate of use of the second memory may be (100-S)%.

The memory usage policy may be determined for each workload and/or each time interval. For example, the memory usage policy applied to a first workload and the memory usage policy applied to a second workload may be different from each other. For example, the memory usage policy applied to the first workload in a first time interval and the memory usage policy applied to the first workload in a second time interval may be different from each other.

For example, operation 210 may include predicting interval performances of the system performance for time intervals based on the number of time-based instructions and a time-based performance event value. The number of time-based instructions may be the number of instructions counted based on the unit of time. For example, if the unit time is "1" second, the number of time-based instructions may be the number of instructions counted for "1 " second. The time-based performance event value may be a performance event value measured based on the unit of time. For example, if the unit time is "1" second, the time-based event value may be a performance event value measured for "1" second. For example, the performance event value may include information about the number of cache misses, a memory access latency, the number of TLB misses, a computation speed, or a combination thereof.

The time intervals may be intervals determined by dividing a given time based on a predetermined unit. The system performance may be predicted for each time interval, and the system performance in each time interval may be referred to as an interval system performance, or simply an interval performance. Operation 220 may include an operation of determining interval policies of the memory usage policy for the time intervals based on the interval performances. The memory usage policy may be determined for each time interval based on the interval performances, and the memory usage policy for each time interval may be referred to as an interval memory usage policy, or simply an interval policy.

The operation of predicting the interval performances may include an operation of determining an instruction-based performance event value based on the number of time-based instructions and the time-based performance event value, and an operation of predicting the interval performances based on the instruction-based performance event value. The instruction-based performance event value may be a performance event value measured based on the unit of number of instructions. For example, if the number of unit instructions is "100", the instruction-based event value may be a performance event value measured while the "100" instructions are processed.

The workload may have a different characteristic for each time interval. For example, the workload may have a characteristic of requiring a low latency in the first time interval and a characteristic of requiring a wide bandwidth in the second time interval. Instruction-based analysis may exhibit high accuracy in determining these characteristics.

**In** operation 230, the processor may process a workload using the first memory and the second memory according to the memory usage policy. Operation 230 may include an operation of performing memory access sampling on memory pages on which memory access is performed and generating page information about sample pages of the memory pages according to the memory access sampling, an operation of generating importance information about the sample pages based on the page information, and an operation of selecting a storage location of a first sample page of the sample pages from the first memory and the second memory based on the importance information. For example, the memory access may include access to read data in a memory and/or access to store data in the memory. The memory access sampling may be an operation of obtaining the page information about sample pages corresponding to at least a portion of the memory pages on which memory access is performed. Memory pages of the workload currently processed may be determined through memory access sampling.

The page information may include information about sample pages, such as the number of accesses. The importance information may be used to determine the storage location of the sample pages (e.g., the first memory or the second memory). For example, a sample page may have higher importance as the effect on the system performance (e.g., the number of stall cycles) increases. A sample page with high importance may be retained in the first memory (e.g., 120) for a long time, and a sample page with low importance may be stored in the second memory (e.g., 130). For example, a page with an importance value higher than a threshold may be stored in the first memory and a page with an importance value less than or equal to the threshold may be stored in the second memory.

The operation of generating the page information may include an operation of performing the memory access sampling while adjusting a sampling interval based on the system performance. The memory access sampling may be performed at predetermined sampling intervals. The narrower the sampling interval (e.g., the higher the sampling frequency and the shorter the sampling cycle), the higher the accuracy of the information included in the sample pages, and the greater the overhead of memory access sampling. According to embodiments, the sampling interval may be adjusted to a level that appropriately maintains the accuracy of the information included in the sampling pages without increasing the overhead.

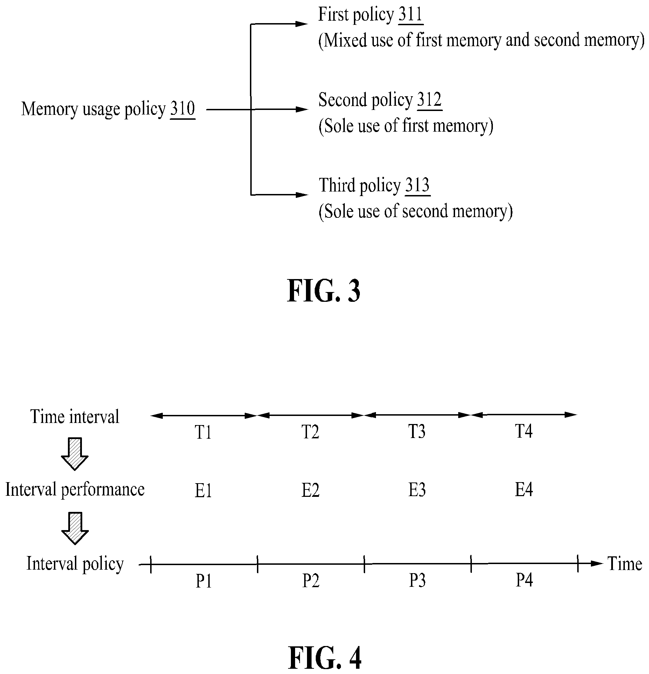

FIG. 3 is a diagram exemplarily illustrating a memory usage policy according to an embodiment. Referring to FIG. 3, a memory usage policy 310 may include a first policy 311 corresponding to the mixed use of a first memory and a second memory, a second policy 312 corresponding to the sole use of the first memory, and a third policy 313 corresponding to the sole use of the second memory. A processor may determine the memory usage policy 310 for each workload and/or each time interval.

For example, the processor may determine the first policy 311 to be the memory usage policy 310 for a memory bandwidth intensive workload. The processor may determine the second policy 312 or the third policy 313 to be the memory usage policy 310 for other workloads. For example, the processor may predict system performance and determine the second policy 312 or the third policy 313 to be the memory usage policy 310 according to the system performance. For example, the system performance prediction may include slowdown prediction. When the slowdown is large, for example, when the slowdown exceeds a threshold (e.g., 10%), the second policy 312 may be determined to be the memory usage policy 310. When the slowdown is small, for example, when the slowdown does not exceed the threshold (e.g., 10%), the third policy 313 may be determined to be the memory usage policy 310.

If the first policy 311 is determined to be the memory usage policy 310, the processor may determine a mixed use ratio for the mixed use based on an offcore latency, a memory metric, or a combination of the offcore latency and the memory metric. For example, when the rate of use of the first memory is S%, the rate of use of the second memory may be (100-S)%.

The offcore latency may be an offcore demand read latency, an offcore RFO offcore latency or an offcore all read latency. For example, the offcore demand read latency may be defined as E/B. A memory bandwidth bound may be quantified with high accuracy using several types of offcore latencies. For example, the offcore latencies may include F/C indicating an offcore RFO offcore latency, (D-E)/(A-B) indicating an offcore prefetching latency, and D/A indicating an offcore all read latency. The offcore latencies may be calculated by a performance analysis tool such as perf in LINUX. Here, 'A' may denote OFFCORE_REQUESTS.ALL_DATA_RD, 'B' may denote OFFCORE_REQUESTS DEMAND DATA RD, C may denote OFFCORE_REQUESTS.DEMAND_RFO, 'D' may denote OFFCORE_REQUESTS_OUTSTANDING.ALL_DATA_RD, 'E' may denote OFFCORE_REQUESTS_OUTSTANDING.DEMAND_DATA_RD, and 'F' may denote OFFCORE_REQUESTS_OUTSTANDING.DEMAND_RFO. The OFFCORE_REQUESTS.ALL_DATA_RD, OFFCORE_REQUESTS.DEMAND_DATA_RD, OFFCORE_REQUESTS.DEMAND_RFO, OFFCORE_REQUESTS_OUTSTANDING.ALL_DATA_RD, OFFCORE_REQUESTS_OUTSTANDING_DEMAND_DATA_RD and OFFCORE_REQUESTS_OUTSTANDING.DEMAND_RFO are examples of a parameter that perf may be invoked with (e.g., perf stat -e parameter) to return a corresponding number of requests that went off-core during execution. For example, invoking perf with OFFCORE_REQUESTS_OUTSTANDING.DEMAND_RFO would return the number of demand read-for-ownership requests that went off-core.

If the offcore all read latency or the offcore RFO offcore latency is greater than a threshold, the workload may start to be bounded by the memory bandwidth from loads or stores, respectively. The threshold may be obtained by executing a single-thread pointer chasing the workload in the first memory. Then, the highest value among the offcore RFO offcore latency, the offcore prefetching latency, and the offcore demand read latency may be determined as the threshold. The pointer chasing the workload may involve repeatedly accessing memory locations based on pointers stored in those locations to measure the corresponding latency. By using a single thread, the measurement focuses on performance without the complexities introduced by multi-threading such as contention for shared resources and synchronization overheads.

Both the offcore latency and the memory metric may be positively related to the memory interleaving (e.g., NUMA interleaving) performance increase. For example, the offcore latency or the memory metric may be proportional to the performance increase. The offcore latency may be expressed as L, and the memory metric may be expressed as M. The performance increase may correspond to a combination of the memory metric and the offcore latency. The memory metric may denote the degree of influence of a memory subsystem. The offcore latency may denote the degree of memory bandwidth bound. The degree of memory bandwidth bound may be a measure of the extent to which the memory bandwidth affects the overall performance of a workload. Like L*M, a metric R may be obtained by multiplying the offcore latency and the memory metric, and the metric R may be used to predict the performance of memory interleaving. Separating the hardware components into several parts may be helpful to the performance of memory interleaving. Accordingly, Rᵢ=Mᵢ*Lᵢ may be defined. Here, i may be for demand reads, prefetching, and stores. A linear relationship may be established between _{Ri} and the most optimal memory interleaving performance.

FIG. 4 is a diagram exemplarily illustrating interval performances and interval policies based on time intervals according to an embodiment. Referring to FIG. 4, interval performances E1 to E4 may be predicted with respect to time intervals T1 to T4, and interval policies P1 and P4 may be determined based on the interval performances E1 to E4.

Interval performances of the system performance for time intervals may be predicted based on the number of time-based instructions and a time-based performance event value (e.g., a number of stalled cycles). An instruction-based performance event value may be determined based on the number of time-based instructions and the time-based performance event value, and the interval performances may be predicted based on the instruction-based performance event value. The number of time-based instructions and the time-based performance event value may be collected using a time-based sampling profiling tool.

The number of time-based instructions and the time-based performance event value may be used as an input A and an input B. An output Q may denote the values of a series of performance events per d (i.e., the number of unit instructions). At this time, an interpolation method may be used. For example, if the current unit time includes fewer instructions than d, the number of unit instructions, instructions of next unit times may be included in instr_{delta} until the number of instructions is d. An event value corresponding to instr_{delta} may be accumulated in event_{delta}. For example, if, during a specific unit time, fewer instructions than the desired number (d) are executed, the deficit will be carried forward; and the system will continue to include instructions from subsequent unit times into instr_{delta} until the accumulated number of instructions meets the target number (d). If the current unit time includes more instructions than d, the number of unit instructions, event_{delta} may be divided proportionally.

Table 1 below exemplarily shows a process of determining an instruction-based performance event value based on the number of time-based instructions and the time-based performance event value (e.g., Algorithm 1).

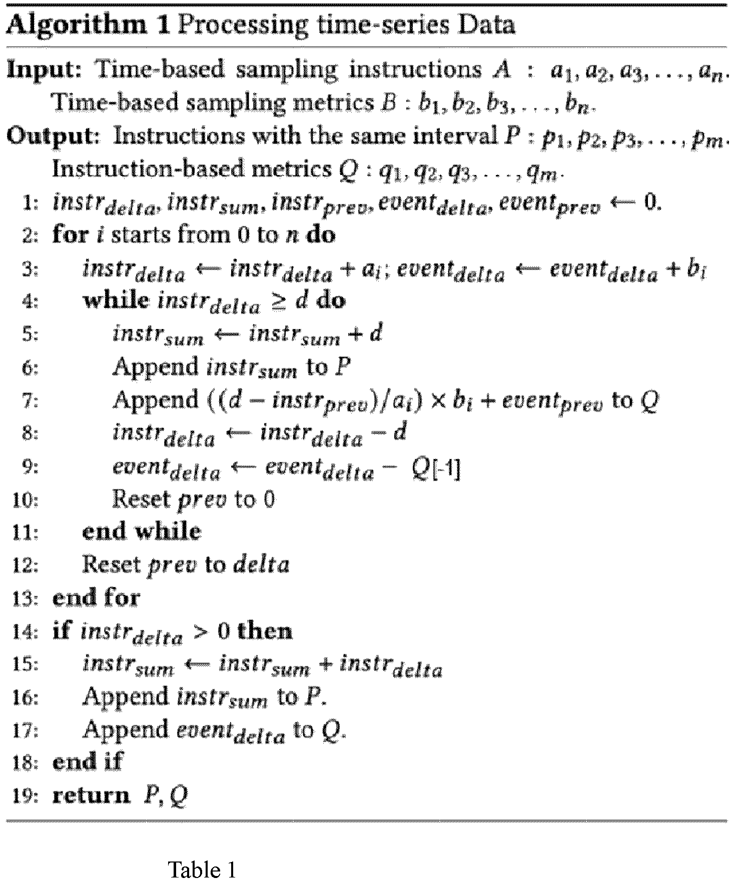

In Table 1, the input A and the input B may be two sets of time series data. The input A may denote the number of instructions in each equal time interval (e.g., "1" second), and the input B may denote a performance metric (e.g., a performance event value) measured in each equal time interval (e.g., "1" second). The output Q may be a performance metric according to each equal number of instructions (e.g., 1 billion instructions). By Algorithm 1, the performance metric of the unit of time may be converted to a performance metric of the unit of number of instructions.

Hereinafter, an example of deriving the output Q in the case of Input A: 100, 120, 20, 30, 40, 50 and Input B: 10, 24, 30, 40, 40, 10 will be described. Here d is set to a predetermined value. For example, in this example, d is set to "60".

At Line 3 in a first iteration (i=0), instr_{delta}=0+100=100 and event_{delta}=0+10=10 are satisfied. Further, instr_{delta}>d is satisfied. At Lines 5 to 10, instrₛᵤₘ=0+60=60, P=[60], (60-0)/100*10+0=6, Q=[6], instr_{delta}=100-60=40, event_{delta}=10-6=4, instrₚᵣₑᵥ=0, and eventₚᵣₑᵥ=0 are satisfied. Q[-1] may denote the last item of Q and prev may denote instrₚᵣₑᵥ and event_{prev.} At Line 12, instrₚᵣₑᵥ=instr_{delta}=40 and eventₚᵣₑᵥ=event_{delta}=4 are satisfied and delta denotes instr_{delta} and event_{delta}.

At Line 3 in a second iteration (i=1), instr_{delta}=40+120=160 and event_{delta}=4+24=28 are satisfied. Further, instr_{delta}>d is satisfied. At Lines 5 to 10, instrₛᵤₘ=60+60=120, P=[60, 120], (60-40)/120*24+4=8, Q=[6, 8], instr_{delta}=160-60=100, event_{delta}=28-8=20, instrₚᵣₑᵥ=0, and eventₚᵣₑᵥ=0 are satisfied. At Line 12, instrₚᵣₑᵥ=instr_{delta}=40 and eventₚᵣₑᵥ=event_{delta}=8 are satisfied.

At Line 3 in a third iteration (i=2), instr_{delta}=40+20=60 and event_{delta}=8+30=38 are satisfied. instr_{delta}=d is satisfied. At Lines 5 to 10, instrₛᵤₘ=180+60=240, P=[60, 120, 180, 240], (60-40)/20*30+8=38, Q=[6, 8, 12, 38], instr_{delta}=60-60=0, event_{delta}=38-38=0, instrₚᵣₑᵥ=0, and eventₚᵣₑᵥ=0 are satisfied. At Line 12, instrₚᵣₑᵥ=instr_{delta}=0 and eventₚᵣₑᵥ=event_{delta}=0 are satisfied.

At Line 3 in a fourth iteration (i=3), instr_{delta}=0+30=30 and event_{delta}=0+40=40 are satisfied. Further, instr_{delta}<d is satisfied. At Line 12, instrₚᵣₑᵥ=instr_{delta}=30 and eventₚᵣₑᵥ=event_{delta}=40 are satisfied.

At Line 3 in a fifth iteration (i=4), instr_{delta}=30+40=70 and event_{delta}=40+40=80 are satisfied. Further, instr_{delta}>d is satisfied. At Lines 5 to 10, instrₛᵤₘ=240+60=300, P=[60, 120, 180, 240, 300], (60-30)/40*40+40=70, Q=[6, 8, 12, 38, 70], instr_{delta}=70-60=10, event_{delta}=80-70=10, instrₚᵣₑᵥ=0, and eventₚᵣₑᵥ=0 are satisfied. At Line 12, instrₚᵣₑᵥ=instr_{delta}=10 and eventₚᵣₑᵥ=event_{delta}=10 are satisfied.

At Line 3 in a sixth iteration (i=5), instr_{delta}=10+50=60 and event_{delta}=10+10=20 are satisfied. Further instr_{delta}<d is satisfied. At Lines 5 to 10, instrₛᵤₘ=300+60=360, P=[60, 120, 180, 240, 300, 360], (60-10)/50*10+10=20, Q=[6, 8, 12, 38, 70, 20], instr_{delta}=60-60=0, event_{delta}=20-20=0, instrₚᵣₑᵥ=0, and eventₚᵣₑᵥ=0 are satisfied. At Line 12, instrₚᵣₑᵥ=instr_{delta}=0 and eventₚᵣₑᵥ=event_{delta}=0 are satisfied.

In this example, Output P: 60, 120, 180, 240, 300, 360 and Output Q: 6, 8, 12, 38, 70, 20 may be obtained.

The algorithm in Table 1 may handle a case where the number of instructions during a predetermined time interval is greater than d and a case where the number of instructions during the predetermined time interval is less than d. If the number of instructions is greater than d, it may be assumed that instructions and corresponding performance metrics are evenly distributed within a corresponding time interval, as shown in Lines 4 to 11 of Table 1. For example, if A=100 and B=10, the first 60% of the performance metric may be used, and the output may be "6". If the number of instructions is less than d, the values may be stored in "prev", as shown in Lines 3 and 4 and Line 12 of Table 1. For example, "prev" may be used to accumulate incoming instructions until the number of instructions is at least d.

The workload may have a different characteristic for each time interval. For example, the workload may have a characteristic of requiring a low latency in a time interval T1 and a characteristic of requiring a wide bandwidth in a time interval T2. Instruction-based analysis may exhibit high accuracy in determining these characteristics. For example, the instruction-based performance event value may indicate a slowdown analysis during workload execution, and may be effectively used to predict a slowdown in each time interval and predict the time series memory interleaving performance.

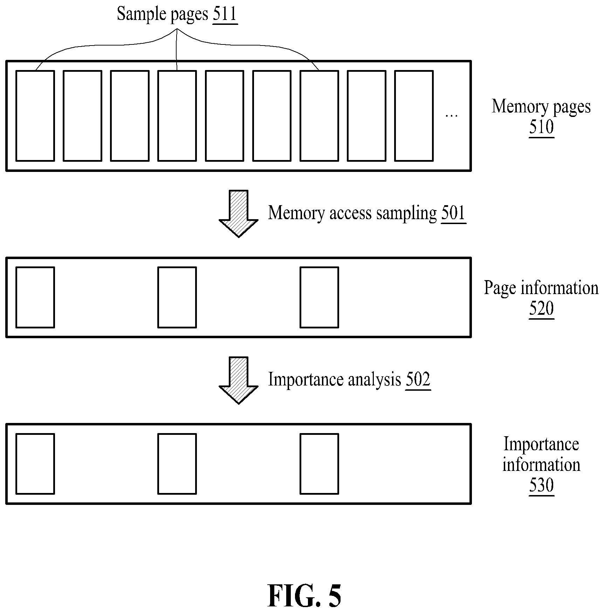

FIG. 5 is a diagram exemplarily illustrating page information and importance information about sample pages of memory pages according to an embodiment. Referring to FIG. 5, memory access sampling 501 may be performed on memory pages 510 on which memory access is performed to determine sample pages 511 of the memory pages 510. Page information 520 about the sample pages 511 of the memory pages 510 according to the memory access sampling 501 may be generated. The sample pages 511 may correspond to at least a portion of the memory pages 510. FIG. 5 shows an example in which the sample pages 511 correspond to 1/3 of the memory pages 510, but embodiments are not limited thereto. Importance information 530 about the sample pages 511 may be generated by importance analysis 502 based on the page information 520. A storage location of each of the sample pages 511 may be selected from a first memory and a second memory based on the importance information 530. For example, the importance analysis 502 may be used to determine which of the sample pages 511 is to be stored in the first memory and which of the sample pages 511 is to be stored in the second memory.

Frequent performance monitoring interrupts and narrow sampling intervals may cause high slowdowns. A slowdown may be alleviated by adjusting the sampling interval of the memory access sampling 501. The sampling interval of the memory access sampling 501 may be adjusted based on the system performance. For example, the sampling interval may be adjusted based on cache misses (e.g., L3 cache misses). For example, the sampling interval may be narrowed for more cache misses and widened for fewer cache misses. For example, the sampling frequency of the memory access sampling 501 may be adjusted based on the system performance. For example, the sampling frequency may be increased for more cache misses and decreased for fewer cache misses. An OS may provide a function to adjust the sampling interval or frequency periodically or aperiodically. Upon detecting a change in the workload access pattern, the OS may immediately modify the sampling interval or frequency without affecting currently buffered events or resetting the sampling configuration.

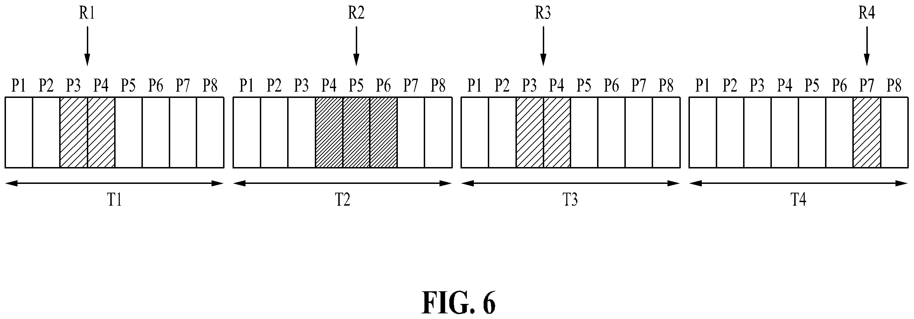

FIG. 6 is a diagram exemplarily illustrating a process of determining a degree of importance according to an embodiment. In a hierarchical memory system, some memory pages in a workload may have higher importance and higher effects on slowdowns. Traditional methods of selecting some memory pages for movement between memory hierarchies rely only on the number of simple accesses to a predetermined memory page. However, there may be memory pages with the same number of accesses but different contributions to performance. According to embodiments, the ratio of the total number of stalled cycles of the workload to the number of accesses to a first memory during a predetermined period of time may be used as a new metric to detect important memory pages. This new metric may be referred to as a stall-based metric.

Page importance may be determined using the stall-based metric. More specifically, the stall-based metric may be measured at fixed time intervals (e.g., 0.2 seconds), and the value of the stall-based metric may be assigned to memory pages accessed during the time interval. Over time, the stall-based metric for each time interval may be accumulated for respective memory pages. In determining the importance of each memory page, the number of accesses to each memory page and/or the cumulative value of the stall-based metric may be considered.

Referring to FIG. 6, time intervals T1 to T4 may be determined according to a fixed time interval, and a portion of the memory pages P1 to P8 may be accessed in the time intervals T1 to T4. For example, the memory pages P3 and P4 may be accessed in the time interval T1, the memory pages P4, P5, and P6 may be accessed in the time interval T2, the memory pages P3 and P4 may be accessed in the time interval T3, and the memory page P7 may be accessed in the time interval T4.

Stall-based metric values R1 to R4 of the time intervals T1 to T4 may be assigned to a portion of the memory pages P1 to P8 accessed. For example, the stall-based metric value R1 may be assigned to the memory pages P3 and P4 in the time interval T1, the stall-based metric value R2 may be assigned to the memory pages P4, P5, and P6 in the time interval T2, the stall-based metric value R3 may be assigned to the memory pages P3 and P4 in the time interval T3, and the stall-based metric value R4 may be assigned to the memory page P7 in the time interval T4. Stall-based metric value (R)= (Number of stalled cycles)/(Number of accesses) may be expressed. For example, the stall-based metric value R1 may be calculated by determining a total number of cycles where memory pages P3 and P4 were needed during time interval T1 but were not present in the first memory, determining a total number of accesses to memory pages P3 and P4 during time interval T1, and dividing the number of cycles by the number of accesses.

A determination according to page importance may be performed based on the values of R accumulated for the memory pages P1 to P8. For example, the accumulated value for memory page P4 (R1+R2+R3) may be higher than the accumulated value for memory page P3 (e.g., R1 + R3). A memory page with a high value of R may have high importance.

When memory access sampling is performed, importance information of each sample page may be determined based on this stall-based metric. For example, importance information of each sample page may be generated based on a stall-based metric indicating the ratio of the total number of stalled cycles of the workload to the number of accesses to the first memory during a predetermined period of time. For example, the workload of a given time interval may correspond to the memory pages that were accessed during the given time interval.

In an comparative embodiment, a machine learning technique is used to estimate system performance (e.g., memory performance). For example, after finding some potentially interesting metrics, a machine learning (ML) method is used to train a model with these features (metrics) to comply with the system performance. This model always generates some constant coefficients for those features. However, there are some fatal drawbacks for this methodology: (1) the relationship between the metrics and performance is hard to explain with those coefficients since it always looks like those coefficients are manually tuned and chosen by the machines; (2) there is still a possibility that the relationship between those metrics and performance is not the same as the model's paradigm (e.g., linear, polynomial, or exponential); and (3) the wrong selection of the features (metrics) for the model will easily incur a large amount of deviation as well as a lot of outliers. Moreover, it is hard to explain the appearance of the outliers for this ML approach. However, system performance variation should be predictable, and also, the prediction model should be explainable in most cases. Thus, at least one embodiment of the discloses attempts to find some self-evident relationships between the selected metrics and the performance slowdown to create a more effective prediction model which can estimate system performance (e.g., on CXL memory) with higher accuracy.

In another comparative embodiment, some specific workloads can receive performance improvements under some specific NUMA interleaving ratios. For example, a binary search may be used find the optimal NUMA interleaving ratio for a few workloads. However, it has the following drawbacks: (1) it manually selects one optimal ratio out of several interleaving ratios, but cannot indicate if the other ratios provide a better performance; (2) it needs to run one workload several times to find the optimal interleaving ratio; (3) and it cannot distinguish which workload will receive performance increases under some specific NUMA interleaving ratios. Thus, at least one embodiment of the disclosure distinguishes which workloads can receive the performance benefits with NUMA interleaving. For example, such workloads may include memory bandwidth intensive (or memory bandwidth bounded) workloads. With this method, those workloads could be filtered out. Then a memory management system may leverage the approach to assign those workloads across two NUMA nodes (e.g., both regular DRAM and CXL). Further, with this method, an offline profiling does not need to run one workload several times (e.g., the workload need only be run once on the local node) and then the performance under several different NUMA interleaving ratios can be estimated.

In yet an another comparative, a slowdown is computed by using experiment execution time in the whole workload-level. However, this has some challenges: (1) it is difficult to cut a single workload in some small pieces and then to compute the slowdown for each time interval; and (2) existing profiling tools use a time-based sampling method to measure the metrics, which makes its hard to directly use the time-based values of a specific event to represent the slowdown in each time interval. Thus, at least one embodiment of the disclosure is capable of measuring performance metrics in small time intervals, so it can analyze the slowdown and relate it to the specific performance metrics, without needing to analyze the whole-workload's performance. This may be helpful for program analysis to determine which part of a group a instructions is likely to suffer a higher performance slowdown.

In an embodiment of the disclosure, given a workload, a metric is defined and used to identify if the workload will receive a performance increase under NUMA interleaving. Some memory pages of the workload are more important and have a higher impact on the slowdown of the workload. In the past, an important page was determined to be the page that had the highest access account. However, two pages with equal access counts may have different contributions to performance. Thus, in this embodiment, a new stall-based metric is used to detect important pages. The stall-based metric is the ratio of the number of stalled cycles to the number of pages of the first memory accessed in a specific time period.

The stall-based metric is then measured during fixed intervals (e.g., every 0.2 seconds) and a corresponding value of the metric is assigned to the specific pages accessed in that interval. The value of the metric for each page may be accumulated over time to determine a more optimal page importance value R. For example, as shown in FIG. 6, the page importance value of P3 could be calculated by summing R1 and R3 and the page importance value of P4 could be calculated by summing R1, R2, and R3. Thus, even if P3 was accessed a same number of times, P4 would receive a higher importance value.

If the workload is identified as receiving the performance increase, a NUMA interleaving ratio for using a local memory (e.g., first memory 120) and a remote memory (e.g., second memory 130) is assigned to the workload. If the workload cannot benefit from the NUMA interleaving, then a prediction is used to estimate the workload slowdown on the remote memory. If the estimated slowdown is more than a certain threshold (e.g., 10 percent), the workload may be placed solely on the local memory rather than on the remote memory. Otherwise, the workload may be placed solely on the remote memory.

The units described herein may be implemented using a hardware component, a software component and/or a combination thereof. A processing device may be implemented using one or more general-purpose or special-purpose computers, such as, for example, a processor, a controller and an arithmetic logic unit (ALU), a digital signal processor (DSP), a microcomputer, a field-programmable gate array (FPGA), a programmable logic unit (PLU), a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciate that a processing device may include multiple processing elements and multiple types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or uniformly instruct or configure the processing device to operate as desired. Software and data may be stored in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter.

The above-described hardware devices may be configured to act as one or more software modules in order to perform the operations of the above-described examples, or vice versa.

A number of embodiments have been described above. Nevertheless, it should be understood that various modifications may be made to these embodiments. For example, suitable results may be achieved if the described techniques are performed in a different order and/or if components in a described system, architecture, device, or circuit are combined in a different manner and/or replaced or supplemented by other components or their equivalents.

## Claims

1. A method for processing a workload, comprising:
predicting system performance according to mixed use of a first memory and a second memory of different types, based on a performance monitoring result of a processor;
determining a memory usage policy regarding the mixed use of the first memory and the second memory based on the system performance; and
processing the workload using the first memory and the second memory according to the memory usage policy.

2. The method of claim 1, wherein the predicting of the system performance comprises predicting at least one of a memory slowdown and a cache slowdown.

3. The method of claim 1 or 2, wherein the memory usage policy is the mixed use of the first memory and the second memory, sole use of the first memory, sole use of the second memory, or a combination thereof.

4. The method of one of claims 1 to 3, wherein the mixed use comprises memory interleaving.

5. The method of one of claims 1 to 4, wherein the determining of the memory usage policy comprises determining a mixed use ratio for the mixed use of the first memory and the second memory based on at least one of an offcore latency and a memory metric.

6. The method of one of claims 1 to 5, wherein
the predicting of the system performance comprises predicting interval performances of the system performance for time intervals based on a number of time-based instructions and a time-based performance event value, and
the determining of the memory usage policy comprises determining interval policies of the memory usage policy for the time intervals based on the interval performances.

7. The method of claim 6, wherein the predicting of the interval performances comprises:
determining an instruction-based performance event value based on the number of time-based instructions and the time-based performance event value; and
predicting the interval performances based on the instruction-based performance event value.

8. The method of one of claims 1 to 7, wherein the processing of the workload comprises:
performing memory access sampling on memory pages that are accessed to generate sample pages;
generating page information about the sample pages according to the memory access sampling;
generating importance information about the sample pages based on the page information; and
selecting a storage location of a first sample page of the sample pages from the first memory and the second memory based on the importance information.

9. The method of claim 8, wherein the generating of the page information comprises performing the memory access sampling while adjusting a sampling interval based on the system performance, or
wherein the generating of the importance information comprises generating the importance information based on a stall-based metric representing a ratio of a total number of stalled cycles of the workload to a number of accesses to the first memory during a predetermined period of time.

10. The method of one of claims 1 to 9, wherein the first memory and the second memory are different in terms of latency, interface, or combination thereof.

11. The method of one of claims 1 to 10, wherein
the first memory is a local memory of the processor arranged closer to the processor than the second memory, and
the second memory is a remote memory of the processor arranged farther from the processor than the first memory.

12. A non-transitory computer-readable storage medium storing instructions that, when executed by a processor of an electronic device comprising a first memory of a first type, and a second memory of a second type different from the first type, cause the processor to:
predict system performance according to mixed use of the first memory and the second memory, based on a performance monitoring result of the processor,
determine a memory usage policy regarding the mixed use of the first memory and the second memory based on the system performance, and
process a workload using the first memory and the second memory according to the memory usage policy.

13. The computer-readable storage medium of claim 12, wherein the processor is configured to predict at least one of a memory slowdown and a cache slowdown to predict the system performance, or
wherein the processor is configured to predict interval performances of the system performance for time intervals based on a number of time-based instructions and a time-based performance event value, and determine interval policies of the memory usage policy for the time intervals based on the interval performances, or
wherein, for processing the workload, the processor is configured to:
perform memory access sampling on memory pages that are accessed to determine sample pages,
generate page information about the sample pages according to the memory access sampling,
generate importance information about the sample pages based on the page information, and
select a storage location of a first sample page of the sample pages from the first memory and the second memory based on the importance information.

14. A system for processing a workload, the system comprising:
a processor having a cache;
a first memory of a first type; and
a second memory of a second type different from the first memory,
wherein the processor is configured to:
perform at least one of a slowdown prediction of the first memory and a slowdown prediction of the cache to predict system performance;
determine a memory usage policy that uses i) both the first memory and the second memory, ii) the first memory solely, or the iii) the second memory solely, based on the system performance; and
process a workload according to the determined memory usage policy.

15. The system of claim 14, wherein the slowdown prediction of the first memory is determined by dividing a number of stalled cycles that occur in the first memory by a total number of cycles in which the first memory is accessed, during a given period, or
wherein the first memory is closer to the processor than the second memory.
